# EUROPEAN PATENT APPLICATION

(11) **EP 4 589 760 A1**
(43) Date of publication of application: **23.07.2025**
(21) Application number: 24196874.2
(22) Date of filing: 28.08.2024
(51) Int. Cl.: H01M 50/569, H01R 12/77, H01R 25/14

(54) **SIGNAL ACQUISITION ASSEMBLY, INTEGRATED BUSBAR, AND BATTERY MODULE**

(30) Priority: 22.01.2024 CN 202410090048; 22.01.2024 CN 202420155619 U; 23.07.2024 WO PCT/CN2024/106865
(71) Applicant: Eve Energy Co., Ltd., Huizhou, Guangdong 516006 (CN)
(72) Inventor: LIU, Huihui, Huizhou, Guangdong 516006 (CN)
(74) Representative: Berggren Oy

(57) **Abstract**

A signal acquisition assembly, an integrated busbar, and a battery module are provided. The signal acquisition assembly includes a signal acquisition body. An end of the signal acquisition body is provided with a roundabout structure. The roundabout structure includes a buffer part and a connection part connected to each other. One of the buffer part and the connection part extends in a direction close to a middle part of the signal acquisition body, and another of the buffer part and the connection part extends in a direction away from the middle part of the signal acquisition body.

## Description

### TECHNICAL FIELD

The present disclosure relates to the technical field of batteries, in particular to a signal acquisition assembly, an integrated busbar, and a battery module.

### BACKGROUND

During the normal use of a battery module (that is, in the charging state or discharging state), the battery module will expand. In condition that the cells expand, the gaps between the bus bar will also expand.

### SUMMARY

The expansion of a plurality of cells inside the battery module generally expands from the middle to both sides, so the gaps between the bus bars will change, causing a large pull at the connection between the two ends of the signal acquisition assembly and the bus bar, thereby reducing the service life of the signal acquisition assembly.

In a first aspect, the embodiments of the present disclosure provide a signal acquisition assembly including a signal acquisition body. An end of the signal acquisition body is provided with a roundabout structure. The roundabout structure includes a buffer part and a connection part connected to each other. The buffer part is connected to the signal acquisition body, a connection part is configured to be connected to a bus bar. One of the buffer part and the connection part extends in a direction close to a middle part of the signal acquisition body, and another of the buffer part and the connection part extends in a direction away from the middle part of the signal acquisition body.

In a second aspect, the embodiments of the present disclosure provide an integrated busbar, including a bus bar and the above acquisition assembly. The connection part is connected to the bus bar.

In a third aspect, the embodiments of the present disclosure provide a battery module including a plastic structural member, a bus bar, the above signal acquisition assembly, a cell group, a cover plate, and a side plate. The cell group includes a plurality of cells. A bus bar and a signal acquisition assembly are mounted on the plastic structural member. The bus bar is electrically connected to the cell group. The side plate is connected to the cover plate through a first connecting member. The side plate is located on a side of the bus bar and the signal acquisition assembly away from the cell group. The first connecting member and the signal acquisition assembly are arranged on both sides of the plastic structural member, respectively.

The present disclosure provides a signal acquisition assembly, an integrated busbar, and a battery module. An end of the signal acquisition body is provided with a roundabout structure, and an opening direction of the roundabout structure facing towards the middle part of the signal acquisition assembly, so that under the condition that the cells expand, the gaps between the bus bar increases, and the bus bar advance away from the middle part of the signal acquisition body, the roundabout structure is capable of being bent at the connection position of the roundabout structure and the signal acquisition body driven by the bus bar. The roundabout structure is pushed into a relaxed state in the process, and the roundabout structure itself is capable of being bent. It is difficult for the signal acquisition body and the bus bar to generate pulling force due to the expansion of the cell, thus damaging the signal acquisition body. In the process, although the roundabout structure is stretched and unfolded, it is still in a relaxed state, which allows the bus bar connected to the roundabout structure to produce significant displacement instead of pulling force on the signal acquisition body. This can reserve sufficient buffer for the possible significant displacement of the bus bar at both ends of the signal acquisition body, making it difficult for the signal acquisition body and bus bar to be damaged by the pulling force caused by the expansion of the cells.

### BRIEF DESCRIPTION OF THE DRAWINGS

FIG. 1 is a schematic view of a signal acquisition assembly provided by some embodiments of the present disclosure.
FIG. 2 is a front schematic view of the signal acquisition assembly provided by some embodiments of the present disclosure.
FIG. 3 is an enlarged schematic view of part A in FIG. 2 provided by some embodiments of the present disclosure.
FIG. 4 is an enlarged schematic view of part B in FIG. 2 by some embodiments of the present disclosure.
FIG. 5 is a schematic view of an integrated busbar by some embodiments of the present disclosure.
FIG. 6 is a schematic cross-sectional view of a battery module by some embodiments of the present disclosure.
FIG. 7 is an enlarged schematic view of part C in FIG. 6 provided by some embodiments of the present disclosure.
FIG. 8 is a schematic view of an integrated busbar by some embodiments of the present disclosure.
FIG. 9 is a schematic plan view of the integrated busbar provided by some embodiments of the present disclosure.
FIG. 10 is an enlarged schematic view of part D in FIG. 9 provided by some embodiments of the present disclosure.
FIG. 11 is a schematic view of a support bracket provided by some embodiments of the present disclosure.
FIG. 12 is a schematic structural view of a local positioning member provided by some embodiments of the present disclosure.

The reference numerals are shown below:

1, signal acquisition body; 2, roundabout structure; 21, buffer part; 22, connection part; 3, buffer arm; 4, mounting part; 41, end mounting hole; 42, middle mounting hole; 43, perforation; 5, first gap; 51, first pre-connection part; 6, second gap; 61, second pre-connection part.

100, plastic structural member; 110, support bracket; 111, mating part; 1111, first hot riveting post; 1112, second hot riveting post; 120, local positioning member; 121, mounting part; 1211, first mounting hole; 1212, second mounting hole; 122, positioning part; 1221, convex part; 1222, limit frame; 123, opening; 200, bus bar; 210, first through hole; 220, second through hole; 230, second connection member; 300, signal acquisition assembly; 310, FPC or FFC; 400, cell group; 410, cell; 420, pole post; 500, cover plate; 600, side plate; 610, first bent part; 620 second bent part; 700, first connection member.

### DETAILED DESCRIPTION

In the description of the present disclosure, it should be understood that, unless specified or limited otherwise, the terms "connected", "coupled" and "fixed" are used broadly, and may be, for example, fixed connections, detachable connections, or integrated connections; may also be mechanical or electrical connections; may also be direct connections or indirect connections via intervening structures; may also be inner communications of two elements or interaction relationships between two elements, which can be understood in the present disclosure by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature. A first feature "below," "under," or "on bottom of" a second feature may include an embodiment in which the first feature is right or obliquely "below," "under," or "on bottom of' the second feature, or just means that the first feature is at a height lower than that of the second feature.

In the description of the embodiments, orientational or positional relationships represented by directional terms mentioned in the present disclosure, such as "upper", "lower", "left", "right", "front", "rear", etc., are orientational or positional relationships based on the drawings, and are merely for the convenience of describing the present disclosure and simplifying the description, rather than indicating or implying that the device or element is intended to have a particular orientation, or is constructed and operated in a particular orientation, and therefore, should not be interpreted as a limitation of this application. In addition, the terms "first" and "second" are used to distinguish in description and have no special meaning.

Electric vehicle power batteries are usually assembled by several single cells in series and parallel to provide the high voltage and large power required to drive electric vehicles. The connection of cells is the key technology for power battery grouping. In traditional battery packs, integrated busbars are usually used to complete the series and parallel connection of battery packs. In addition, in order to collect cell voltage and cell temperature in real time, temperature sensors and voltage sampling wiring harnesses need to be arranged on the surface of cells or integrated busbars.

The integrated busbar is mainly composed of a signal acquisition assembly (flexible printed circuit (FPC), printed circuit board (PCB), flexible flat cable (FFC), etc.), a plastic structural member, a bus bar, etc., which are connected into a whole through hot pressing or riveting, so as to realize the high-voltage series and parallel connection of cells, as well as the temperature sampling and cell voltage sampling of cells. Information such as temperature and voltage is provided to the battery management system (BMS) system through FPC/PCB and connector components.

In the related technologies, since a plurality of cells in a battery module are prone to expand, if the signal acquisition assembly is not designed for tensile resistance, it is easy for the signal acquisition assembly to be pulled and damaged due to an increase in the gaps between the cells.

Based on the above, the present disclosure provides a signal acquisition assembly.

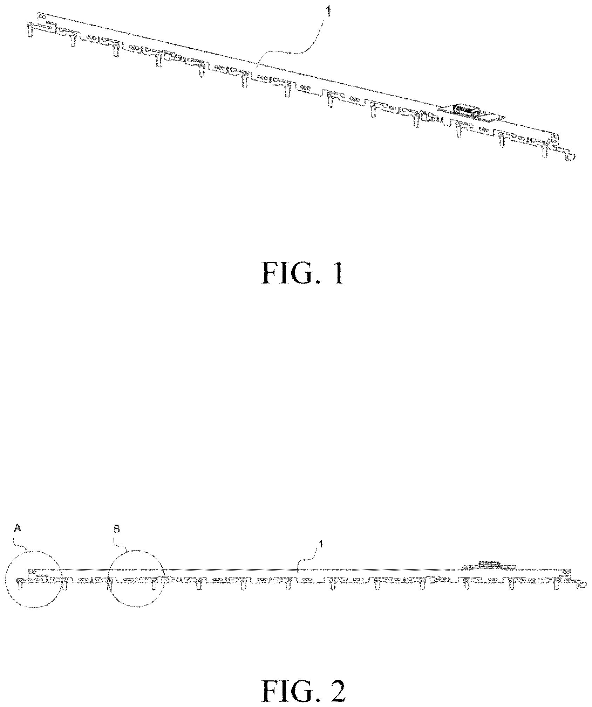

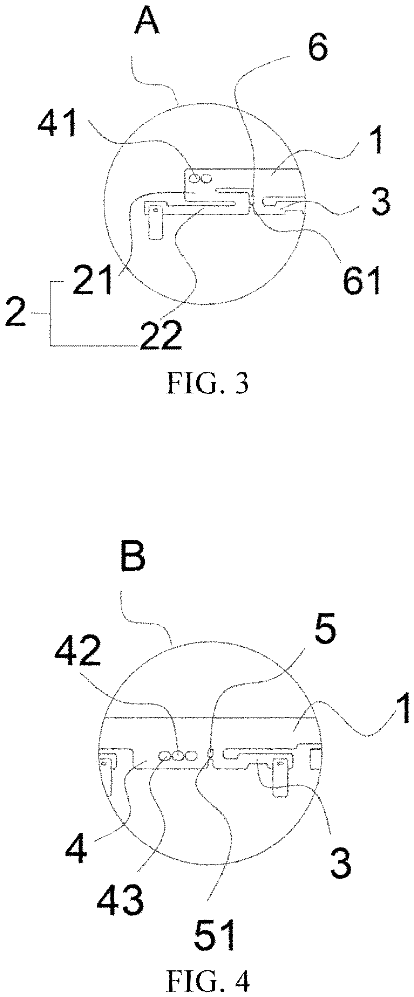

Referring to FIGS. 1 to 3, FIG. 1 is a schematic view of the signal acquisition assembly provided by some embodiments of the present disclosure, FIG. 2 is a front schematic view of the signal acquisition assembly provided by some embodiments of the present disclosure, and FIG. 3 is an enlarged schematic view of part A in FIG. 2 provided by some embodiments of the present disclosure.

In some embodiments, the signal acquisition assembly includes a signal acquisition body 1, both ends of which is provided with a roundabout structure 2, respectively. The roundabout structure 2 includes a buffer part 21 and a connection part 22 connected to each other. The buffer part 21 is connected to the signal acquisition body 1. The connection part 22 is configured to be connected to the bus bar. One of the buffer part 21 and the connection part 22 extends in a direction close to the middle part of the signal acquisition body 1, and another of the buffer part 21 and the connection part 22 extends in a direction away from the middle part of the signal acquisition body 1.

In some embodiments, an extending length of both ends of the roundabout structure 2 may be designed differently according to the expansion degree of the cells (or the distance of displacement of the bus bar).

In some embodiments, tin material is generally configured to weld the roundabout structure 2 and the bus bar. UV glue may be used to further strengthen the connection strength.

In some embodiments, the bus bar is generally an aluminum bar or a copper bar.

Both ends of the signal acquisition body 1 are respectively provided with a roundabout structure 2, so that under the condition that the cells expand, the gaps between the bus bar increases, and the bus bar expands along the direction away from the middle part of the signal acquisition body 1, driven by the bus bar, the connection between the roundabout structure 2 and the signal acquisition body is capable of being bent. In the process, the bending of the roundabout structure 2 makes it maintain a connection state with the acquisition body although it is stretched and unfolded. The bending of the roundabout structure 2 reserves sufficient buffer for the bus bar to expand outward due to the expansion of the cells, thereby avoiding the problem that the signal acquisition body 1 is pulled or even damaged by the bus bar due to the expansion of the cells.

In some embodiments of the present disclosure, the buffer part 21 and the connection part 22 form a U-shaped member. The U-shaped member includes a first end and a second end. The first end of the U-shaped member is connected to the signal acquisition body 1. The second end of the U-shaped member is configured to be connected to the bus bar. An opening of the U-shaped member faces away from the middle part of the signal acquisition body 1.

In some embodiments, the buffer part 21 and the connection part 22 may also form a semi-annular member.

In some embodiments of the present disclosure, referring to FIG. 4, FIG. 4 is an enlarged schematic view of part B in FIG. 2 provided by the embodiments of the present disclosure. The signal acquisition body 1 is further provided with a plurality of buffer arms 3, and the plurality of buffer arms 3 are symmetrically arranged along the middle part of the signal acquisition body 1. The buffer arms 3 on one side of the middle part of the signal acquisition body 1 and the buffer arms 3 on another side of the middle part of the signal acquisition body 1 extend in directions away from each other.

In some embodiments, one side edge of the signal acquisition body 1 is provided with a plurality of buffer arms 3. The buffer arm 3 is L-shaped member. The notch formed between the buffer arm 3 and the signal acquisition body 1 faces the middle part of the signal acquisition body 1. Under the condition that the cells expand, the gaps between the bus bar increase, the bus bar expands in a direction away from the middle part of the signal acquisition body 1, and the the cells on both sides expand in opposite directions. A plurality of buffer arms 3 symmetrically arranged along the middle part of the signal acquisition body 1 are capable of buffering the expansion of the cells on both sides, respectively. Driven by the bus bar, the buffer arm 3 first bends to buffer the pulling force generated by the displacement of the bus bar, instead of generating the pulling force on the signal acquisition body 1. In the process, the buffer arms 3 are in a relaxed state, so that the signal acquisition body 1 is capable of being avoided from being damaged due to the pulling force between the signal acquisition body 1 and the bus bar caused by the expansion of the cells.

In some embodiments of the present disclosure, the buffer arm 3 is an L-shaped member. The L-shaped member includes a first end and a second end. The first end of the L-shaped member is connected to the signal acquisition body 1. The second end of the L-shaped member is configured to be connected to the bus bar.

In some embodiments, the buffer arm 3 may be a bent member.

In some embodiments of the present disclosure, both ends of the signal acquisition body 1 are provided with roundabout structures 2, and a plurality of buffer arms 3 are located between the roundabout structures 2 at both ends.

Since the expansion force gradually accumulates from the middle to the two ends, the buffer arms 3 in the middle provide a first-stage buffer for the expansion of the cells, and the roundabout structures 2 at the two ends provide a second-stage buffer for the expansion of the cells. Therefore, different buffers can not only be provided for different expansion forces to meet the buffering requirements of the cells, but also the structure of the signal acquisition assembly can be simplified.

In some embodiments of the present disclosure, as shown in FIGS. 3 and 4, the signal acquisition body 1 is provided with end mounting holes 41, and the end mounting holes 41 are provided at both end parts of the signal acquisition body 1.

In some embodiments, the signal acquisition body 1 is provided with a plurality of middle mounting holes 42, and the plurality of middle mounting holes 42 are uniformly disposed in the signal acquisition body 1 along the extending direction of the signal acquisition body 1.

In some embodiments, the signal acquisition body 1 is provided with end mounting holes 41 and/or a plurality of middle mounting holes 42. The end mounting holes 41 are provided at both end of the signal acquisition body 1, and the middle mounting holes 42 are uniformly provided in the signal acquisition body 1 along the length direction of the signal acquisition body 1, so that the entire signal acquisition body 1 can be mounted on the plastic bracket through the end mounting holes 41 and the middle mounting holes 42 under uniform force.

In some embodiments of the present disclosure, as shown in FIG. 4, the signal acquisition body 1 is provided with a plurality of mounting parts 4. The middle mounting holes 42 are provided in the mounting part 4. The mounting parts 4 and the buffer arms 3 are located on the same side of the signal acquisition body 1. A first gap 5 is formed between a buffer arm 3 and a corresponding mounting part 4. A first pre-connection part 51 is provided in the first gap 5. The first pre-connection part 51 is connected to the mounting part 4 and the corresponding buffer arm 3.

In some embodiments, a plurality of mounting parts 4 are integrally provided on one side edge of the signal acquisition body 1. The middle mounting holes 42 are provided on the mounting parts 4, which on the one hand does not affect the wiring arrangement inside the signal acquisition body 1, and on the other hand does not affect the ability of the signal acquisition body 1 to resist pulling, thereby not reducing the ability of the signal acquisition body 1 to resist the expansion of the cells.

In some embodiments, the mounting parts 4 and the buffer arms 3 are located on the same side edge of the signal acquisition body 1, so that the width of the signal acquisition assembly is capable of being limited.

In some embodiments, during the working process of the signal acquisition assembly, if the cells expand, the first pre-connection part 51 will break during the cell expanding process, so that the buffer arms 3 move normally within the preset maximum range, and during the mounting process, the movement range of the buffer arms 3 relative to the signal acquisition body 1 is limited due to the existence of the first pre-connection part 51, which is more convenient to preposition and weld the end of the second end of the buffer arm 3 on the signal acquisition body 1 with the bus bar.

In some embodiments of the present disclosure, as shown in FIG. 4, at least one side of the middle mounting hole 42 is provided with a perforation 43 along the extending direction of the signal acquisition body 1.

In some embodiments, the middle mounting hole 42 is respectively provided with perforations 43 along both sides of the length direction of the signal acquisition body 1. Under the condition that the cells expand, the hot riveting post of the plastic bracket first pulls the connection part between the perforations 43 and the mounting hole, thereby increasing the moving space of the hot riveting post without damaging the signal acquisition body 1, thereby improving the ability of the signal acquisition assembly to resist the expansion of the cells.

In some embodiments of the present disclosure, as shown in FIG. 4, the middle mounting hole 42 is a waist-shaped hole, and the extending direction of the waist-shaped hole is along the expansion direction of the cell.

In some embodiments, the middle mounting hole 42 is a waist-shaped hole, which can further increase the moving space of the hot riveting post of the plastic bracket after the three holes are integrated, thereby further improving the pulling resistance of the signal acquisition assembly, and thus improving the ability of the signal acquisition assembly to resist the expansion of the cells.

In some embodiments of the present disclosure, referring to FIG. 3, the signal acquisition body 1 is provided with a plurality of mounting parts 4, the middle mounting hole 42 is provided in the corresponding mounting part 4. A second gap 6 is formed between the roundabout structure 2 and the buffer arm 3 or the mounting part 4. A second pre-connection part 61 is provided in the second gap 6. The second pre-connection part 61 is connected to the roundabout structure 2 and the buffer arm 3 or the mounting part 4.

In some embodiments, Under the condition that the cells expand during the working of the signal acquisition assembly, the second pre-connection part 61 breaks during the cell expansion process, so that the roundabout structure 2 moves normally within the preset maximum range. Due to the existence of the second pre-connection part 61 during the mounting process, the movement range of the roundabout structure 2 relative to the signal acquisition body 1 is limited, and it is more convenient to preposition and weld the end of the second end of the roundabout structure 2 of the signal acquisition body 1 with the bus bar.

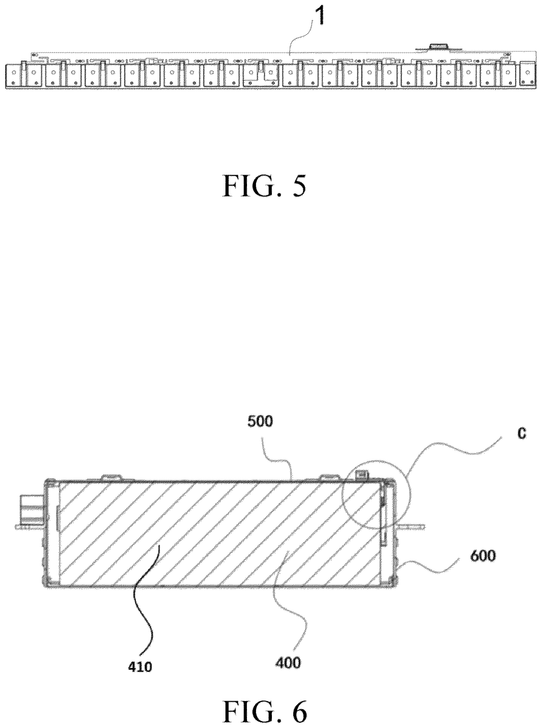

Referring to FIG. 5, FIG. 5 is a schematic view of an integrated busbar provided by some embodiments of the present disclosure. The present disclosure provides the integrated busbar including a signal acquisition assembly as described in any one of the above embodiments, and the connection part 22 is connected to the bus bar.

Since the signal acquisition assembly in the present disclosure can improve the problem of significant pulling and breakage generated easily between the two ends of the signal acquisition assembly and the bus bar due to the expansion of the cells during the working process, the integrated busbar including the signal acquisition assembly also has the above beneficial effects.

The integrated busbar is mounting in the battery module (inside the battery pack) and is configured to transmit voltage and temperature information of each position in the battery module to the battery management system. The integrated busbar includes a plastic structural member, a bus bar and a signal acquisition assembly. The signal acquisition assembly is connected to the bus bar and the cells. The signal acquisition assembly and the bus bar are installed on the plastic structural member. The signal acquisition assembly is configured to acquire the voltage in the bus bar and the temperature in the battery module, thereby inputting the output signal into the battery management system.

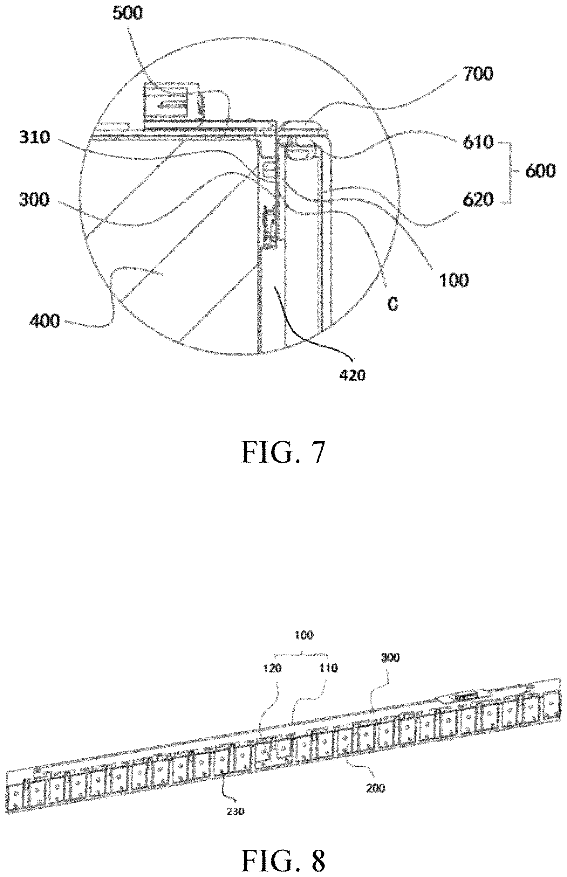

Referring to FIGS. 6 and 7, FIG. 6 is a schematic view of the battery module provided by the embodiments of the present disclosure, and FIG. 7 is an enlarged schematic view of C part of FIG. 6 provided by the embodiments of the present disclosure. The embodiments of the present disclosure provide a battery module, including a plastic structural member 100, a bus bar 200 (not shown in FIGS. 6 and 7), and a signal acquisition assembly 300, a cell group 400, a cover plate 500, and a side plate 600. The acquisition component 300 may be the acquisition assembly of any one of the embodiments of the above embodiments. The cell group 400 includes a plurality of cells 410. The bus bar 200 and the signal acquisition assembly 300 are electrically connected to the plastic structural member 100. The side plate 600 is connected to the cover plate 500 through a first connecting member 700. The side plate 600 is located on a side of the bus bar 200 and the signal acquisition assembly 300 away from the cell group 400. The first connecting member 700 and the signal acquisition assembly 300 are arranged on both sides of the plastic structural member 100, respectively.

In some embodiments, under normal circumstances, the signal acquisition assembly 300 is installed on the side of the plastic structural member 100 away from the cell group, that is, after the assembly of the battery module is completed, the signal acquisition assembly 300 of the integrated busbar, the nickel sheet, the bus bar 200, etc. are installed on the side of the plastic structural member 100 away from the cells 410, and after the upper cover of the module is assembled, the appearance of the signal acquisition assembly 300, the nickel sheet, and the bus bar 200 can be seen. However, the assembly for the existing battery module generally adopts the riveting method. Under the condition that the signal acquisition component 300 is installed on the side of the plastic structural part 100 away from the battery cell 410, it is easy to damage the signal acquisition component 300 during the riveting process. However, in the embodiments of the present disclosure, the signal acquisition assembly 300 is installed on the side of the plastic structural member 100 close to the cells 410, so that the signal acquisition assembly 300 can be avoided from being scratched/damaged by riveting in the process of assembling the battery module, and thus the service life of the entire integrated busbar can be improved.

In other embodiments, the signal acquisition assembly 300 may be installed on the side of the plastic structural member 100 facing away from the cells 410, and the first connecting member 700 may be provided on the side of the plastic structural member 100 close to the cells 410.

In the embodiments of the present disclosure, the first connecting member 700 and the signal acquisition assembly 300 are arranged on both sides of the plastic structural member 100, respectively, so that when the cover plate 500 and the side plate 600 are mounting through the first connecting member 700, the signal acquisition assembly 300 is not scratched, and the service life of the entire integrated busbar can be improved.

Referring to FIG. 7, in some embodiments of the present disclosure, the first connecting member 700 includes a riveting post, and the riveting post is inserted into the cover plate 500 and the side plate 600 in a direction close to the signal acquisition assembly 300.

In some embodiments, the first connecting member 700 may be inserted into the cover plate 500 and the side plate 600 along the direction parallel to the main plate surface of the side plate 600, or may also be inserted into the cover plate 500 and the side plate 600 along the direction parallel to the main plate surface of the cover plate 500. Since both are inserted into the cover plate 500 and the side plate 600 in the direction facing the signal acquisition assembly 300, the riveting post is inserted into the cover plate 500 and the side plate 600 from the outside to the inside, and the installation is very convenient and easy to operate. However, if the riveting post is inserted in the direction towards the signal acquisition assembly 300, and the signal acquisition assembly 300 is located between the plastic structural member 100 and the first connecting member 700, it is very easy to be scratched from the first connecting member 700. Therefore, by disposing the signal acquisition assembly 300 on the side of the plastic structural member 100 facing away from the first connecting member 700, the signal acquisition assembly 300 is capable of being prevented from being scratched by the first connecting member 700 when the cover plate 500 and the side plate 600 are installed.

Referring to FIGS. 1 and 7, in some embodiments of the present disclosure, the signal acquisition assembly 300 includes the FPC 310 or the FFC 310. The FPC 310 or the FFC 310 is located on a side of the bus bar 200 close to the first connecting member 700.

In some embodiments, the FPC 310 or the FFC 310 occupies a small space and is more convenient to arrange. The FPC 310 or the FFC 310 is located on the side of the bus bar 200 close to the first connecting member 700, which can make the bus bar 200 and the pole posts 420 of the cells 410 easier to align and install.

Referring to FIG. 7, in some embodiments of the present disclosure, the side plate 600 includes a first bent part 610 and a second bent part 620. The first bent part 610 is parallel to the cover plate 500 and is connected to the cover plate 500 through a first connecting member 700. The second bent part 620 is parallel to the plastic structural member 100 and is located on the side of the bus bar 200 and the signal acquisition assembly 300 facing away from the cell group 400.

In some embodiments, the side plate 600 is bent into a first bent part 610 and a second bent part 620, so that the first bent part 610 can be parallel to the cover plate 500. The arrangement of the first bent part 610 can increase the connection area between the side plate 600 and the cover plate 500, thereby not only improving the connection strength, but also facilitating the first connecting member 700 to connect the side plate 600 and the cover plate 500, thereby enabling the first connecting member 700 to connect the first bent part 610 and the cover plate 500, and connecting the side plate 600 and the cover plate 500. Bending the side plate 600 into the first bend 610 and the second bend 620 also reduces wear between the side plate 600 and the cover plate 500.

Referring to FIG. 7, in some embodiments of the present disclosure, the cover plate 500 is located on one side of the cell group 400, the side plate 600 is located on another side of the cell group 400. The pole posts 420 of the cell group 400 are located on the side of the cell 410 opposite to the side plate 600, and the bus bar 200 is electrically connected to the pole posts 420.

In some embodiments, the cell group 400 of the embodiments of the present disclosure is a cell group of a blade battery. The cover plate 500 is provided on one side of the cell group 400, the side plate 600 is provided on another side of the cell group 400, the pole posts 420 of the cell group 400 are provided on the side of the cell 410 opposite to the side plate 600, and the bus bar 200 are electrically connected to the pole posts 420, so that the alignment between the cell group 400 and the bus bar 200 is easier, and the installation efficiency is higher.

Referring to FIG. 8, FIG. 8 is a schematic view of the integrated busbar provided by the embodiments of the present disclosure. In some embodiments of the present disclosure, the plastic structural member 100 includes a support bracket 110 and a local positioning member 120, the local positioning member 120 is connected to the bus bar 200. The bus bar 200 is installed on the support bracket 110, and the local positioning member 120 is capable of positioning the bus bar 200 on the cells 410.

In the related technologies, the plastic structural member 100 generally includes a support bracket 110 for installing the bus bar 200 and the signal acquisition assembly 300, and a local positioning member 120 for positioning the pole posts 420 of the cells 410 and the bus bar 200. In general, the support bracket 110 and the local positioning member 120 are integrated. The integrated support bracket 110 and the local positioning member 120 require thicker or harder plastic parts, causing higher mold opening cost and higher material cost. In the embodiments of the present disclosure, the support bracket 110 for mounting the bus bar 200 and the signal acquisition assembly 300 and the local positioning member 120 for positioning the pole posts 420 of the cells 410 and the bus bar 200 in the plastic structural member 100 are separately molded, or the mold may also be integrally molded with uneven thickness. The support bracket 110 plays the role of supporting and insulating the bus bar 200, and the local positioning member 120 plays the role of positioning the bus bar 200, that is, only the hardness or thickness of the local positioning member 120 needs to be ensured, so that the preparation cost of the plastic structural member 100 can be lower under the premise of ensuring the positioning of the bus bar 200 and the cells 410.

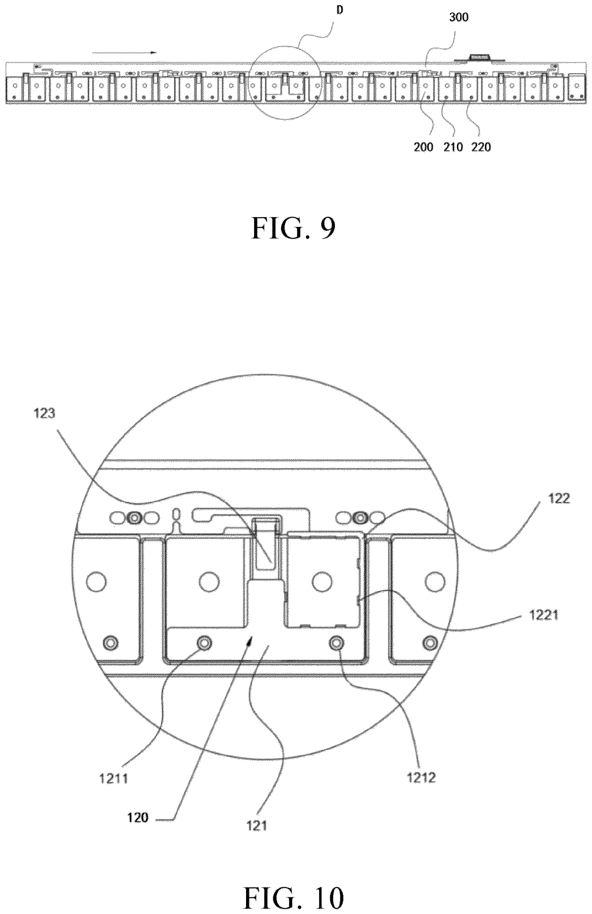

Referring to FIGS. 8 and 9, FIG. 9 is a schematic plan view of the integrated busbar provided by some embodiments of the present disclosure. In some embodiments of the present disclosure, the support bracket 110, the local positioning member 120, and the bus bar 200 are connected through a second connecting member 230. The bus bar 200 is sandwiched between the support bracket 110 and the local positioning member 120.

In some embodiments, the support bracket 110, the local positioning member 120 and the bus bar 200 are connected through a second connecting member 230. The second connecting member 230 may be a hot riveting post, and the hot riveting post may be integrally provided on the support bracket 110. The hot riveting post penetrates the hole of the bus bar 200 and the hot riveting hole of the local positioning member 120 to connect the support bracket 110, the local positioning member 120 and the bus bar 200. In other embodiments, the second connecting member 230 may be a bolt or may be other connectors in other ways. By connecting the support bracket 110, the local positioning member 120, and the bus bar 200 through the same second connecting member 230, the connection structure is simple, and the bus bar 200 can be better clamped and fixed.

Referring to FIGS. 8 and 9, in some embodiments of the present disclosure, the length of the support bracket 110 is greater than the length of the local positioning member 120, and the local positioning member 120 is located at the middle of the support bracket 110 along its length direction (as indicated by the arrow in the figure).

In some embodiments, the purpose of disposing the local positioning member 120 at the middle of the support bracket 110 is that the positioning tolerance between the bus bar 200 and the cells 410 gradually accumulates from the middle to both ends, and by disposing the local positioning member 120 at the middle, that is, by disposing the positioning reference at the middle, the accumulated positioning tolerance between the cells 410 at both ends and the corresponding bus bar 200 can be minimized, thereby avoiding the problem that the integrated busbar and the cell group 400 cannot be assembled due to interference.

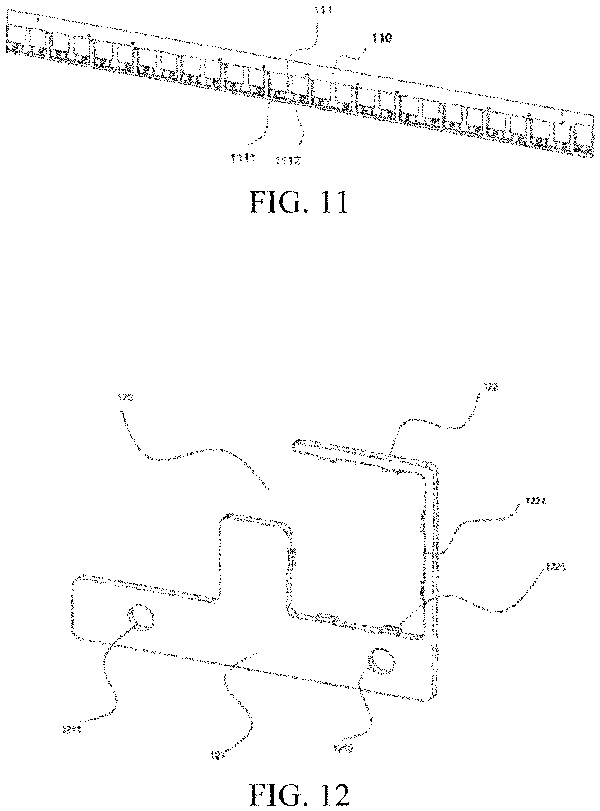

FIG. 9 is a schematic plan view of the integrated busbar provided by the embodiments of the present disclosure, FIG. 10 is an enlarged schematic view of part D of FIG. 9 provided by the embodiments of the present disclosure, and FIG. 12 is a schematic view of the local positioning member 120 provided by the embodiments of the present disclosure. In some embodiments of the present disclosure, the local positioning member 120 is located on the side of the support bracket 110 close to the cell group. The local positioning member 120 includes a mounting part 121 and a positioning part 122. The positioning part 122 is used to position the bus bar on the pole posts 420 of the cell 410. The mounting part 121 is connected to the bus bar 200.

In some embodiments, the local positioning member 120 includes a mounting part 121 and a positioning part 122 for positioning the pole posts 420 of the cells 410 on the bus bar 200 to achieve positioning between the bus bar 200 and the pole posts 420 of the cells 410, thereby making the welding position alignment between the pole posts 420 of the cells 410 and the bus bar 200 more precise.

Specifically, the second connecting part 230 of the present embodiment includes a first hot riveting post 1111 and a second hot riveting post 1112. A first mounting hole 1211 and a second mounting hole 1212 are provided on the mounting part 121 to cooperate with the first hot riveting post 1111 and the second hot riveting post 1112 of the supporting bracket 110 to realize the installation and fixation between the supporting bracket 110 and the local positioning member 120. in the first aspect, it can avoid the additional installation of hot rivet columns on the support bracket 110 and the local positioning component 120, which would require an increase in the preparation process and material cost of the plastic structural member 100. In the second aspect, using two mounting holes (the first mounting hole 1211 and the second mounting hole 1212) can prevent the local positioning member 120 from rotating relative to the support bracket 110 and loosening. In the third aspect, the first mounting hole 1211 and the second mounting hole 1212 correspond one-to-one with the first through hole 210 and the second through hole 220, respectively, which can more accurately achieve the positioning between the bus bar 200 and the pole posts 420 of the cells 410, thereby making the welding position alignment between the pole posts 420 of the cells 410 and the bus bar 200 more precise.

Referring to FIGS. 10 and 12, in some embodiments of the present disclosure, the positioning part 122 includes a limit frame 1222 surrounding a corresponding pole post 420 of the cells 410. A plurality of convex parts 1221 are provided inside the limit frame 1222. The convex parts 1221 on the local positioning member 120 are provided toward the edge rounded corner of the pole post 420 of the cells 410.

In some embodiments, the positioning part 122 is a limit frame 1222, which can limit the pole post 420 of the cell 410 according to the outer wall size of the pole post 420 of the cell 410. A plurality of convex parts 1221 are provided inside the limit frame 1222, which can prevent the pole post 420 of the cell 410 from moving around in the limit frame 1222 after entering the limit frame 1222. For this reason, the inner wall size of the limit frame 1222 can be designed to be slightly larger than the outer wall size of the pole post 420 of the cell 410. The convex part 1221 can be adapted to the corresponding concave part on the cell 410, which is more conducive to quickly and accurately positioning the pole post 420 of the battery cell 410.

In some embodiments, the convex parts 1221 on the local positioning member 120 are disposed toward the edge rounded corner of the corresponding pole post 420 of the cells 410, so that the convex parts 1221 on the local positioning member 120 can guide the pole posts 420 of the cells 410 to achieve positioning faster during the installation of the pole posts 420 of the cells 410.

Referring to FIGS. 10 and 12, in some embodiments of the present disclosure, the positioning part 122 includes a limit frame 1222 surrounding a corresponding pole post 420 of the cells 410. The bus bar 200 and the signal acquisition assembly 300 are welded to form a welding area by a nickel sheet, and an opening 123 is reserved in an overlapping position of the limit frame 1222 and the welding area.

In some embodiments, since the position where the limit frame 1222 is located coincides with the original welding area where the bus bar 200 is welded with the signal acquisition assembly 300, it is necessary to provide the opening 123 at the overlapping position where the limit frame 1222 is located, so that the positioning for the pole posts 420 of the cells 410 and the bus bar 200 can also be realized without affecting the welding between the signal acquisition assembly 300 and the bus bar 200. Furthermore, the opening 123 is reserved at the overlapping position between the limit frame 1222 and the welding area to make the limit frame 1222 more flexible, and the positioning for the pole posts 420 of the cells 410 and the bus bar 200 faster.

In some embodiments of the present disclosure, the hardness of the local positioning member 120 is greater than the hardness of the support bracket 110.

In some embodiments, in the related technologies, in order to save costs, the support bracket 110 is provided as a member with a thinner thickness or a softer material, for example, the support bracket 110 is a blister bracket, and the local positioning member 120 is a plastic bracket. When the bus bar 200 and the pole posts 420 of the cells 410 are welded, since the local positioning member 120 is soft in texture, the positioning effect thereof cannot be better exerted, and the external jig cannot position the bus bar 200 and the pole posts 420 of the cells 410 by clamping the support bracket 110, resulting in insufficient installation accuracy. In the present disclosure, the local positioning member 120 and the support bracket 110 are separately arranged, so that the local positioning member 120 is harder than the support bracket 110 due to different thicknesses and materials. Specifically, in the present embodiment, the material of the local positioning bracket 12 is polycarbonate (PC) and acrylonitrile butadiene styrene (ABS). A thickness of the local positioning member 120 ranges from 1.2 mm to 1.5 mm. The material of the support bracket 110 is PC, and a general thickness of the support bracket 110 is 0.5 m. Accordingly, on the one hand, the material cost of the plastic structural member 100 can be reduced. On the other hand, during the process of positioning the bus bar 200 and the pole posts 420 of the cells 410, the local positioning member 120 having a larger hardness has a more accurate positioning effect, thereby making the welding between the bus bar 200 and the pole posts 420 of the cells 410 more accurate.

In some embodiments of the present disclosure, the support bracket 110 is a blister bracket.

In this way, the support bracket 110 and the local positioning member 120 can be made of the same material, but the manufacturing method is different. The hardness of the support bracket 110 is softer than that of the local positioning member 120.

Referring to FIGS. 9 and 11, FIG. 9 is a schematic plan view of the integrated busbar provided by the embodiments of the present disclosure, and FIG. 11 is a schematic view of the support bracket 110 provided by the embodiments of the present disclosure. In some embodiments of the present disclosure, the number of bus bars 200 is multiple, and each bus bar 200 is provided with a first through hole 210 and a second through hole 220. The support bracket 110 is provided with a plurality of mating parts 111 corresponding to the bus bars 200, respectively. The mating part 111 is provided with a first hot riveting post 1111 and a second hot riveting post 1112 corresponding to the first through hole 210 and the second through hole 210, respectively. The first hot riveting post 1111 and the second hot riveting post 1112 are the second connecting member 230 mentioned above.

In some embodiments, the plurality of bus bars 200 are mounted on the first hot riveting post 1111 and the second hot riveting post 1112 of the mating part 111 through the first through hole 210 and the second through hole 220 to realize the mounting of the bus bars 200 and the support bracket 110. The two positioning pins can prevent the bus bars 200 from being loosened when rotated relative to the support bracket 110.

In some embodiments of the present disclosure, the fuse on the signal acquisition assembly 300 is a surface mount fuse.

In some embodiments, the fuse on the signal acquisition module 300 is a surface mount fuse, thereby, on the one hand, the problem of strict acquisition line resistance requirements can be solved. On the other hand, the surface mount fuse has the characteristics of slow blowing, which can alleviate the impact caused by the pulse current of the testing equipment. On the other hand, the surface mount fuse is repairable compared with the etched fuse, which can reduce module losses caused by fuse blowing caused by misoperation.

In some embodiments of the present disclosure, the bus bar 200 and the signal acquisition assembly 300 are welded. UV glue is also bonded between the bus bar 200 and the signal acquisition assembly 300.

In some embodiments, spot UV glue is added to the welding joint between the signal acquisition module 300 and the nickel sheet, so as to avoid the problem that the solder joint falls off due to stress generated by the expansion of the battery module at the soft and hard joint between the nickel sheet and the signal acquisition module 300, and to reinforce the soft and hard joint. In addition, the spot glue at the collection point covers the surface of the solder sheet, so as to avoid the problem of the increase of the resistance due to the oxidation of the nickel sheet and the signal acquisition module 300 by the soldering process, thereby avoiding the low accuracy of the acquisition result of the signal acquisition module 300.

In some embodiments of the present disclosure, a battery pack is provided, which includes the battery module as in any one of the above embodiments.

Since the battery module of the present disclosure can improve the problem that the first connecting member easily scratches the signal acquisition assembly of the integrated busbar, the battery pack including the battery module also has the above beneficial effects.

## Claims

1. A signal acquisition assembly, comprising a signal acquisition body (1), **characterized in that** an end of the signal acquisition body (1) is provided with a roundabout structure (2), the roundabout structure (2) comprises a buffer part (21) and a connection part (22) connected to each other, the buffer part (21) is connected to the signal acquisition body (1), a connection part (22) is configured to be connected to a bus bar, one of the buffer part (21) and the connection part (22) extends in a direction close to a middle part of the signal acquisition body (1), and another of the buffer part (21) and the connection part (22) extends in a direction away from the middle part of the signal acquisition body (1).

2. The signal acquisition assembly of claim 1, **characterized in that** the buffer part (21) and the connection part (22) form a U-shaped part, the U-shaped part comprises a first end and a second end, the first end of the U-shaped part is connected to the signal acquisition body (1), the second end of the U-shaped part is configured to be connected to the bus bar, and an opening of the U-shaped part faces away from the middle part of the signal acquisition body (1).

3. The signal acquisition assembly of claim 1, **characterized in that** the signal acquisition body (1) is further provided with a plurality of buffer arms (3), the plurality of the buffer arms (3) are symmetrically arranged along the middle part of the signal acquisition body (1), and ones of the plurality of the buffer arms (3) on one side of the signal acquisition body (1) and ones of the plurality of the buffer arms (3) on another side of the signal acquisition body (1) extend in opposite directions.

4. The signal acquisition assembly of claim 3, **characterized in that** each of the buffer arms (3) is an L-shaped member, the L-shaped member comprises a first end and a second end, the first end of the L-shaped member is connected to the signal acquisition body (1), and the second end of the L-shaped member is configured to be connected to the bus bar; and/or
both ends of the signal acquisition body (1) are provided with the roundabout structure (2), respectively, and the plurality of the buffer arms (3) are located between two roundabout structures (2) of the both ends.

5. The signal acquisition assembly of claim 3, **characterized in that** the signal acquisition body (1) is provided with a plurality of end mounting holes (41), and the end mounting holes (41) are provided at both ends of the signal acquisition body (1), and/or;
the signal acquisition body (1) is provided with a plurality of middle mounting holes (42), and the plurality of the middle mounting holes (42) are uniformly arranged in the signal acquisition body (1) along an extending direction of the signal acquisition body (1).

6. The signal acquisition assembly of claim 5, **characterized in that** the signal acquisition body (1) is provided with a plurality of mounting parts (4), the middle mounting holes (42) are provided in the mounting parts (4), the mounting parts (4) and the buffer arms (3) are located on a same side of the signal acquisition body (1), a first gap (5) is formed between one of the buffer arms (3) and a corresponding one of the mounting parts (4), and a first pre-connection part (51) is provided in the first gap (5), and the first pre-connection part (51) is connected to the one of the mounting parts (4) and the corresponding one of the buffer arms (3); and/or
at least one side of each of the middle mounting holes (42) is provided with a perforation (43) in the extending direction of the signal acquisition body (1); and/or
each of the middle mounting holes (42) is a waist-shaped hole, and an extending direction of the waist-shaped hole is along an expansion direction of a cell.

7. The signal acquisition assembly of claim 5, **characterized in that** the signal acquisition body (1) is provided with a plurality of mounting parts (4), the middle mounting holes (42) are provided in the mounting parts (4), the roundabout structure (2) and a corresponding one of the buffer arms (3) or a corresponding one of the mounting parts (4) form a second gap (6), a second pre-connection part (61) is provided in the second gap (6), and the second pre-connection part (61) is connected to the roundabout structure (2) and the corresponding one of the buffer arms (3) or the corresponding one of the mounting parts (4).

8. An integrated busbar, **characterized by** comprising a bus bar and the signal acquisition assembly of any one of claims 1 to 7, wherein the connection part (22) is connected to the bus bar.

9. A battery module, **characterized by** comprising a plastic structural member (100), a bus bar (200), the signal acquisition assembly (300) of any one of claims 1 to 7, a cell group (400), a cover plate (500) and a side plate (600), wherein the cell group (400) comprises a plurality of cells (410), the bus bar (200) and the signal acquisition assembly (300) are mounted on the plastic structural member (100), the bus bar (200) is electrically connected to the cell group (400), the side plate (600) is connected to the cover plate (500) through a first connecting member (700), the side plate (600) is located on a side of the bus bar (200) and the signal acquisition assembly (300) away from the cell group (400), and the first connecting member (700) and the signal acquisition assembly (300) are arranged on both sides of the plastic structural member (100), respectively.

10. The battery module of claim 9, **characterized in that** the first connecting member (700) comprises a riveting post inserted into the cover plate (500) and the side plate (600) in a direction close to the signal acquisition assembly (300); and/or
the signal acquisition assembly (300) comprises a flexible printed circuit (FPC) (310) or a flexible flat cable (FFC) (310), and the FPC (310) or the FFC (310) is located on a side of the bus bar (200) close to the first connecting member (700).

11. The battery module of claim 9, **characterized in that** the side plate (600) comprises a first bent part (610) and a second bent part (620), the first bent part (610) is parallel to the cover plate (500) and is connected to the cover plate (500) through the first connecting member (700), and the second bent part (620) is parallel to the plastic structural member (100) and is located on a side of the bus bar (200) and the signal acquisition assembly (300) away from the cell group (400); and/or
the cover plate (500) is located on one side of the cell group (400), the side plate (600) is located on another side of the cell group (400), a plurality of pole posts (420) of the cell group (400) are located on a side of the cells (410) opposite to the side plate (600), and the bus bar (200) is electrically connected to the pole posts (420).

12. The battery module of any one of claims 9-11, **characterized in that** the plastic structural member (100) comprises a support bracket (110) and a local positioning member (120), the local positioning member (120) is connected to the bus bar (200), the bus bar (200) is mounted on the support bracket (110), and the local positioning member (120) is capable of positioning the bus bar (200) on the cells (410).

13. The battery module of claim 12, **characterized in that** the support bracket (110), the local positioning member (120) and the bus bar (200) are connected through a second connection member (230), and the bus bar (200) is sandwiched between the support bracket (110) and the local positioning member (120); and/or
a length of the support bracket (110) is greater than a length of the local positioning member (120), and the local positioning member (120) is located at a middle of the support bracket (110) along a length direction; and/or
a hardness of the local positioning member (120) is greater than a hardness of the support bracket (110).

14. The battery module of any one of claims 12-13, **characterized in that** the local positioning member (120) is located on a side of the support bracket (110) close to the cell group (400), the local positioning member (120) comprises a mounting part (121) and a positioning part (122), the mounting part (121) is configured to position the bus bar (200) on the pole posts (420) of the cells (410), and the positioning part (121) is connected to the bus bar (200).

15. The battery module of claim 14, **characterized in that** the positioning part (122) comprises a limit frame (1222) surrounding a corresponding one of the pole posts (420) of the cells (410), a plurality of convex parts (1221) are provided inside the limit frame (1222), and the convex parts (1221) of the local positioning member (120) are disposed towards an edge rounded corner of the corresponding one of the pole posts (420) of the cells (410); and/or
the positioning part (122) comprises a limit frame (1222) surrounding a corresponding one of the pole posts (420) of the cells (410), the bus bar (200) and the signal acquisition assembly (300) are welded to form a welding area by a nickel sheet, and an opening (123) is reserved in an overlapping position of the limit frame (1222) and the welding area.
